(19) Europäisches Patentamt
European Patent Office
Office européen des brevets

(11) Veröffentlichungsnummer: **0 390 028 A2**

(12) **EUROPÄISCHE PATENTANMELDUNG**

(21) Anmeldenummer: **90105696.0**

(22) Anmeldetag: **26.03.90**

(51) Int. Cl.5: **C08F 291/00, C08F 279/02, C08F 8/30, C08F 8/06**

(30) Priorität: **28.03.89 DE 3910023**

(43) Veröffentlichungstag der Anmeldung: **03.10.90 Patentblatt 90/40**

(84) Benannte Vertragsstaaten: **BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Baumgartner, Ehrenfried, Dr.**
**Goethestrasse 1**
**D-6701 Roedersheim-Gronau(DE)**
Erfinder: **Blumenstein, Uwe, Dr.**
**Granderhofstrasse 2**
**D-6700 Ludwigshafen(DE)**
Erfinder: **Bueschl, Rainer, Dr.**
**Hollandstrasse 14**
**D-6701 Roedersheim-Gronau(DE)**
Erfinder: **Rieber, Norbert, Dr.**
**Liebfrauenstrasse 1c**
**D-6800 Mannheim 51(DE)**

(54) **Pfropfcopolymere und Verfahren zu ihrer Herstellung.**

(57) Pfropf(co)polymere mit mindestens einer Einheit der allgemeinen Struktur

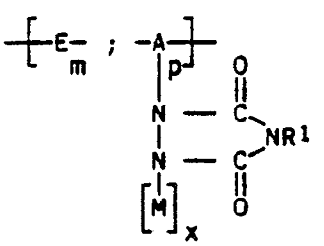

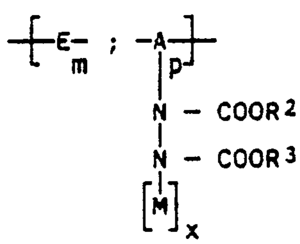

in der $[M]_x$ eine aus x Monomereinheiten bestehende polymere Seitenkette aus einem durch radikalische Polymerisation gebildeten Homo- oder Copolymeren, x eine Zahl von 10 bis 100 000, E und A einpolymerisierte Fadenabschnitte eines Kettenmoleküls und m und p jeweils wenigstens 1 und zusammen eine Zahl von mehr als 100 (den Polymerisationsgrad) bedeuten, die durch Addition eines 4-substituierten 1,2,4-Triazolin-3,5-dions und/oder Azodicarbonsäureesters an einen eine allylische CH-Gruppierung oder einen anderen, bewegliche Protonen aufweisenden Fadenabschnitt gebildet worden sind, wobei die Substituenten $R^1$ bzw. $R^2$ und $R^3$ Alkyl, Aryl oder Hetaryl oder deren Äquivalente bedeuten und $R^2$ und $R^3$ gleich oder verschieden sein können sowie Verfahren zur Herstellung verzweigter Pfropf (co)polymerisate durch Bildung von freien Radikalen entlang eines vorgebildeten Kettenmoleküls und zugabe von Monomeren, wobei durch Radikalkettenpolymerisation Seitenketten gebildet werden (Pfropfcopolymerisation), dadurch gekennzeichnet, daß man ein beweglichen Wasserstoff (H) enthaltendes Kettenmolekül der allgemeinen Struktur (I)

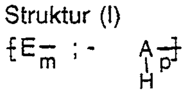 (I)

in der $E_m$ und $A_p$ jeweils m bzw. p einpolymerisierte Fadenabschnitte eines Kettenmoleküls m und p bedeuten, mit einem Triazolindion der allgemeinen Formel II oder einem Azodicarbonsäureester der

EP 0 390 028 A2

allgemeinen Formel III,

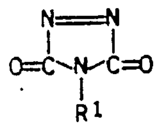

(II)

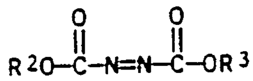

(III)

in denen $R^1$ und $R^2$ und/oder $R^3$ von Wasserstoff verschieden ist, in an sich bekannter Weise umsetzt, an den so erhaltenen Substituenten durch Oxidation freie Radikale erzeugt, sowie mit mindestens einem radikalisch polymerisierbaren, olefinisch ungesättigten Monomeren zusammenbringt.

## Pfropfcopolymere und Verfahren zu ihrer Herstellung

Die Erfindung betrifft die Herstellung von Pfropfpolymeren bzw. Pfropfcopolymeren durch Bildung von freien Radikalen entlang eines geeigneten vorgebildeten Kettenmoleküls und Zugabe von Monomeren, wobei durch Radikalkettenpolymerisation Seitenketten gebildet werden.

Derartige, eine sogenannte Kammstruktur aufweisende Pfropf(co)-polymere finden als Verträglichkeitsvermittler zwischen unverträglichen Polymeren Verwendung und dienen zur gegenseitigen Verankerung der unverträglichen Polymerphasen in der Phasengrenzfläche. Die Pfropf(co)-polymeren können entweder während der Polymerisation einer der Polymerphasen "in situ" erzeugt oder auch nachträglich mit den unverträglichen Polymeren gemischt werden.

Technisch wichtig ist die Verwendung der Pfropf(co)-polymeren zur Erzeugung von mit Kautschuk ausgerüstetem schlagfestem Polystyrol, Poly-Styrol-Acrylnitril, Poly-α-Methylstyrol-Acrylnitril oder Polymethylmethacrylat. Vor allem die in-situ-Pfropfung eines gelösten Kautschuks im Masse- oder Lösungspolymerisationsverfahren ist von Bedeutung. Der Einfluß des Gehalts an Pfropfcopolymeren während der Herstellung von z.B. schlagfesten Polymeren auf die Kautschukmorphologie und die Produkteigenschaften ist u.a. von A.E. Echte in Angew. Makromol. Chem. 58/59, 175 (1977) und Angew. Makromol. Chem. 90, 95 (1980) und von H. Keskkula in Plastics and Rubber: Materials and Applications 1979 (5), 66-77 beschrieben. Demnach werden um so kleinere Kautschukpartikel gebildet, je höher der Gehalt an Pfropfcopolymeren ist. Es können auf diese Weise hochglänzende schlagzähe Produkte hergestellt werden. In der Technik werden häufig Blockkautschuke wie z.B. Styrol-Butadienblockkautschuk eingesetzt, um hochglänzende schlagfeste Produkte herzustellen (DE-OS 17 69 118; EP 00 21 488 und DE-AS 26 13 352).

Vorgefertigte Styrol-Butadien-Blockcopolymerisate sind üblicherweise teurer als Polybutadienkautschuke. Außerdem besitzen sie eine vergleichsweise hohe Lösungsviskosität, die insbesondere bei der Herstellung von Produkten mit hohem Kautschukgehalt störend ist. Es bestand daher die Aufgabe Methoden zu finden, um Pfropfcopolymere gezielt und effizient zu erzeugen.

Das übliche, radikalisch ausgelöste Verfahren zur Herstellung von Pfropfpolymeren besteht darin, daß entlang eines vorgebildeten Kettenmoleküls an geeigneten Stellen (vor allem an vorhandenen Doppelbindungen) freie Radikale gebildet werden, die dann zum Start einer Seitenkette führen. Dies ist ausführlich beschrieben bei B. Vollmert, Grundriß der Makromolekularen Chemie, Band II, S. 201 ff, Karlsruhe, 1980.

Der Nachteil dieses Verfahrens liegt in seiner Empfindlichkeit gegenüber Luft, d.h. Sauerstoff: Sauerstoff wirkt bekanntlich als Inhibitor bei der radikalischen Polymerisation, so daß vor der Polymerisation gründlich mit einem Inertgas gespült werden muß (B. Vollmert, a.a.0.).

Aufgabe der Erfindung ist es, ein Pfropfverfahren anzugeben, das zumindest unempfindlich gegenüber Sauerstoff sein und, wenn möglich, sogar Sauerstoff benötigen sollte, um die für die Polymerisation nötigen Initiatorradikale zu erzeugen.

Es wurde nun gefunden, daß durch den Einbau gewisser Stickstoffverbindungen in geeignete Makromoleküle radikalbildungsfähige und damit polymerisationsfähige Strukturen gebildet werden.

Die Erfindung betrifft die Herstellung von Pfropfcopolymeren durch Umsetzung von allylische CH-Gruppen enthaltenden Polymeren, bevorzugt Polydienen, in einer "En-Reaktion" mit 4-substituierten 1,2,4-Triazolin-3,5-dionen (II) oder mit Azodicarbonsäureestern (III)

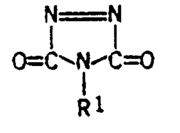

(II)

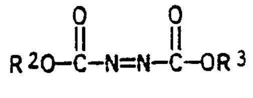

(III),

Oxidation zu einem polymergebundenen Urazol- bzw. Hydrazoradikal und Zusatz eines ungesättigten radikalisch polymerisierbaren Monomeren.

Unmittelbarer Erfindungsgegenstand sind das Verfahren zur Herstellung verzweigter Pfropf(co)-polymerisate und die nach diesem Verfahren erhältlichen Pfropfcopolymerisate. Das Verfahren besteht in der Bildung von freien Radikalen entlang eines vorgebildeten Kettenmoleküls und Zugabe von Monomeren, wobei durch Radikalkettenpolymerisation Seitenketten gebildet werden (Pfropfcopolymerisation), indem man

ein beweglichen Wasserstoff (H) enthaltendes Kettenmolekül der allgemeinen Struktur (I)

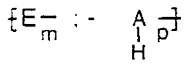 (I)

in der $E_m$ und $A_p$ jeweils m bzw. p einpolymerisierte Fadenabschnitte eines Kettenmoleküls, m und p jeweils wenigstens 1 und zusammen mindestens 100 bedeuten, mit einem Triazolindion der allgemeinen Formel II oder einem Azodicarbonsäureester der allgemeinen Formel III,

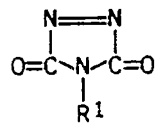 (II)

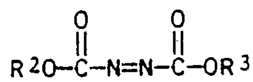 (III)

in denen $R^1$ und $R^2$ und/oder $R^3$ von Wasserstoff verschieden ist, in an sich bekannter Weise umsetzt, an den so erhaltenen Substituenten durch Oxidation freie Radikale erzeugt, sowie mit mindestens einem radikalisch polymerisierbaren, olefinisch ungesättigten Monomeren zusammenbringt.

Die erfindungsgemäßen Pfropf(co)polymere besitzen mindestens eine Einheit der allgemeinen Struktur

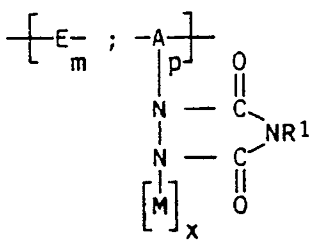 oder 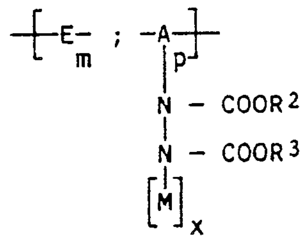

in der $[M]_x$ eine aus x Monomereinheiten bestehende polymere Seitenkette aus einem durch radikalische Polymerisation gebildeten Homo- oder Copolymeren, x eine Zahl von 10 bis 100 000, E und A einpolymerisierte Fadenabschnitte eines Kettenmoleküls und m und p jeweils wenigstens 1 und zusammen eine Zahl von mehr als 100 (den Polymerisationsgrad) bedeuten, die durch Addition eines 4-substituierten 1,2,4-Triazolin-3,5-dions und/oder Azodicarbonsäureesters an einen eine allylische CH-Gruppierung oder einen anderen, bewegliche Protonen aufweisenden Fadenabschnitt gebildet worden sind, wobei die Substituenten $R^1$ bzw. $R^2$ und $R^3$ Alkyl, Aryl oder Hetaryl oder deren Äquivalente bedeuten und $R^2$ und $R^3$ gleich oder verschieden sein können.

Das erfindungsgemäße Verfahren wird am nachstehenden Reaktionsschema deutlich, das die vorzunehmenden Schritte an einem beliebigen Fadenabschnitt aufweist.

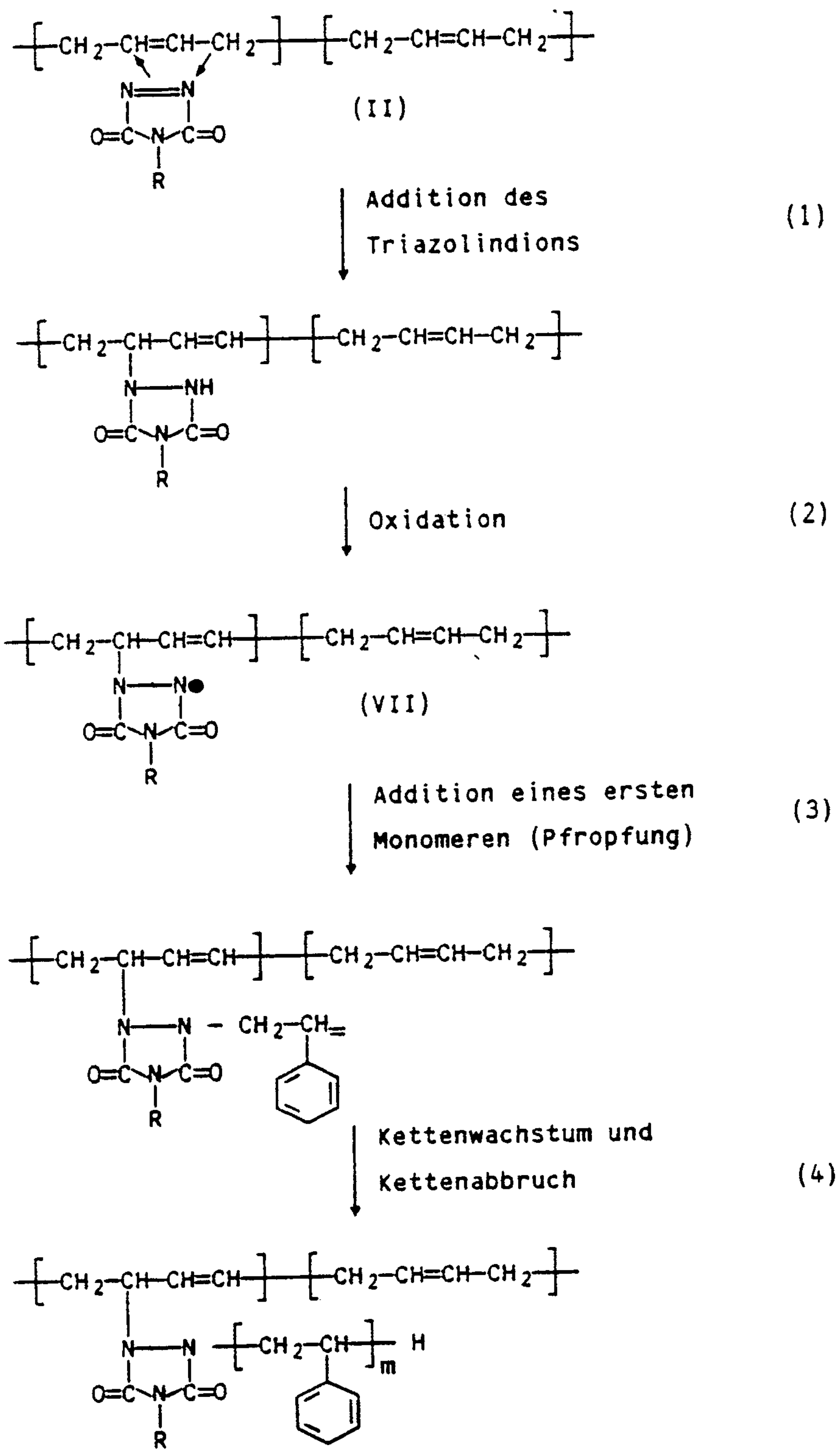


Das Verfahren kann in entsprechender Weise mit den strukturell verwandten Azodicarbonsäureestern durchgeführt werden.

Neben Polybutadien oder Copolymeren des Butadiens sind auch andere, vor allem allylische CH-Gruppen (d.h. beweglichen Wasserstoff) enthaltende Polydiene einer Pfropfung nach der Reaktionsfolge (1) - (4) zugänglich, z.B. Polyisopren, Butylkautschuk (Copolymerisat aus Isobutylen und Isopren), Polychloropren, Nitrilkautschuk (Copolymerisat aus Butadien und Acrylnitril), Styrol-Dien-Blockkautschuke (Dien-Komponente: z.B. Butadien, Isopren, Chloropren, Dimethylbutadien), EPDM-Elastomere mit z.B. Ethylidennorbornen oder Dicyclopentadien als Dien-Komponente im Terpolymeren sowie deren teilhydrierte analoge Polydiene.

Die Modifizierung von Polydienen mit 4-substituierten 1,2,4-Triazolin-3,5-dionen ist an sich bekannt, z.B. aus

G.B. Butler; Ind. Eng. Chem. Prod. Res. Dev. 19, 512 - 528 (1980),
G.B. Butler und A.G. Williams; J. Polym. Sci.: Polym. Chem. Ed. 17, 1117 - 1128 (1979),
K.-W. Leong und G.B. Butler; J. Macromol. Sci.-Chem., A 14, 287-319 (1980),
T.C.S. Chen. und G.B. Butler; J. Macromol. Sci.-Chem., A 16, 757-768 (1981),
L.S. Schechtman; Polym. Preprints 27 (2), 48-49 (1986) und
R. Stadler und J. Burgert; Makromol. Chem. 187, 1681 (1986).

4-substituierte 1,2,4-Triazolin-3,5-dione und offenkettige Azodicarbonsäureester addieren auch an Polymere, die bewegliche Protonen z.B. in Form von Alkohol-, Mercaptan-, Amin-, aktivierten Methylen- oder Säuregruppen enthalten, vgl. S.E. Müller in Houben-Weyl, Methoden der organischen Chemie, Band x/2, Teil 2, Seiten 147-157, Stuttgart 1967.

Damit sind erfindungsgemäß auch solche modifizierte Polymere einer gezielten Pfropfung zugänglich, die zwar keine En-Gruppierungen besitzen, aber durch Co- oder Terpolymerisation mit geeigneten Monomeren bewegliche Protonen im Polymeren enthalten, z.B. Butylacrylat, copolymerisiert mit Diolmonoacrylat, Acrylsäure, Acrylamid und deren Methacrylanalogen oder mit Maleinamid.

Ausgangsverbindungen für die erfindungsgemäß benötigten Verbindungen II sind geeignete Urazole. Solche Urazole sind an sich bekannt (DE-OS 30 27 612, Organic Synthesis Vol. 51, 121 (1971) und können durch Umsetzung von Hydrazodicarbonamid mit Aminen oder Hydrazincarbonsäureestern mit Isocyanaten hergestellt werden.

Die Oxidation von Urazolen zu 4-substituierten 1,2,4-Triazolin-3,5-dionen kann mit den unterschiedlichsten Oxidationsmitteln vorgenommen werden.

$N_2O_4$: J.C. Stickler und W.H. Pirkle
J. Org. Chem. 31, 3444 - 3445 (1966)
Ortho Pharmaceutical Corp.
DOS 27 04 330
DMSO: J.A. Moore, R. Muth und R. Sorace
J. Org. Chem. 39 (25), 3799 - 3800 (1974)
$Cl_2$: Bayer AG, DOS 32 44 657

In der Formel II kann $R^1$ stehen für einen Alkyl-, Cycloalkyl-, Aryl-, Aralkyl- oder Alkylarylrest mit bis zu 25 C-Atomen, einen 5- bis 8-gliedrigen Heterocyclus mit Stickstoff, Sauerstoff oder Schwefel als Heteroatom oder für $NR^1R^2$, wobei $R^1$ und $R^2$ $C_1$-$C_4$-Alkylgruppen oder Wasserstoff sind.

R' kann auch einen (Cyclo)alkenyl- oder -Alkinylrest mit 2 bis 25 C-Atomen darstellen.

Beispiele für Alkylreste sind Methyl, Ethyl, Propyl, Butyl, Pentyl, Hexyl, Heptyl, Octyl, Nonyl, Decyl, Undecyl, Dodecyl, Neopentyl, 3,5,5-Trimethylhexyl, 3-Methylhexyl, 2-Ethylhexyl und 2,5,5-Trimethylhexyl.

Ein Beispiel für einen Cycloalkylrest ist Cyclohexyl.

Beispiele für Aralkylreste sind Benzyl und Phenethyl.

Unsubstituierte Arylreste sind beispielsweise Phenyl und Naphthyl. Substituierte Arylreste sind Alkylaryl-, Cycloalkylaryl-, arylsubstituierte Alkylaryl- und arylsubstituierte Aryl-Reste.

Beispiele für Alkylarylreste sind 2-, 4- und 3-Tolyl, 2,6- und 2,4-Dimethylphenyl, Trimethylphenyl, 2-, 4- und 3-Isopropylphenyl, Nonylphenyl, tert.-Butylphenyl, 2,4-Diisopropylphenyl und Triisopropylphenyl.

Ein Beispiel für einen Cycloalkylrest ist 4-Cyclohexylphenyl. Beispiele für arylsubstituierte Alkylrest sind Benzylphenyl und 4-Phenethylphenyl.

Ein Beispiel für ein arylsubstituiertes Aryl ist Diphenyl.

Bevorzugte Reste $R^1$ sind Phenyl, 2-, 3- und 4-Tolyl, 2,6-Dimethylphenyl, 2,7-Diisopropylphenyl und Triisopropylphenyl.

Besonders bevorzugte Verbindungen II sind 4-Methyl- und 4-Phenyl-1,2,4-triazolin-3,5-dion.

Der Rest $R^1$ kann seinerseits durch ein oder mehrere funktionelle Gruppen substituiert sein. Beispiele für geeignete funktionelle Gruppen sind Halogen-, Nitril-, Ether-, Nitro-, Carbonsäureester-, Carbonsäureamid-, Säureanhydrid-, Imid-, Lactam-, Epoxy-, Urethan-, Oxazolin-, Carbonyl-, Thioether-, Sulfonsäureester-, Phosphatgruppen; geeignet sind auch Salze von Carboxylgruppen.

Daneben ist es auch möglich, als Rest $R^1$ Reste geeigneter UV- oder Hitze-Stabilisatoren, wie Derivaten des 2,2,4,4-Tetramethylpiperidins oder Benzotriazol (z.B. 2-(2-Hydroxy-5-methylphenyl)-benzotriazol, von Antioxidantien wie sterisch gehinderter Phenole (z.B. 2,6-Di-tert.-butylphenyl)phosphit), Flammschutzmittel wie halogenhaltiger Flammschutzmittel (z.B. Derivate des Tetrabrombisphenol A, des Tetrabromphthalimids bzw. -säureanhydrids, bromierte Biphenylether oder bromierte Phenole), phosphorhaltiger Flammschutzmittel wie Phosphate und Phosphinoxide (z.B. Triphenylphosphat oder -phosphinoxid) oder von Derivaten des Melamins (z.B. Melamincyanurat), Farbstoffen wie Anthrachinonfarbstoffen, Antistatika wie Salzen von

Carbonsäuren oder Sulfonsäuren (z.B. langkettige aliphatische Sulfonsäuresalze), quartäre Ammoniumsalze, oligomere oder polymere Ether des Ethylenglykols bzw. Propylenglykols, mesogene Seitengruppen, wie sie in DE-A 36 31 841 beschrieben sind (z.B. Alkoxyl-4′-methoxybiphenyl), oder anderer Wirkstoffe einzusetzen.

Die Substituenten $R^1$ allerdings müssen, was sich von selbst versteht, so beschaffen sein, daß sie die Modifizierungsreaktion nicht verhindern.

Die Herstellung der Azodicarbonsäureester III ist in "Methoden der organischen Chemie, Houben-Weyl, Band x/2, Teil 2, S. 818 f., Stuttgart 1967" beschrieben.

Die Reste $R^2$ und $R^3$ der Azodicarbonsäureester III können gleich oder verschieden sein und den Resten $R^1$ der Formel II entsprechen.

Die Herstellung von Elastomeren oder anderen bewegliche Protonen enthaltenden Polymeren mit 4-substituierten 1,2,4-Triazolin-dionen oder mit Azoacylverbindungen erfolgt vorzugsweise in Lösung oder in Suspension. Für die Umsetzung geeignete Lösungsmittel sind solche, die sowohl die Polymeren als auch das entsprechende 4-substituierte 1,2,4-Triazolin-3,5-dion bzw. den Azodicarbonsäureester lösen, ohne die Umsetzung, zu stören. Geeignete Lösungsmittel sind beispielsweise aromatische oder chlorierte Kohlenwasserstoffe, Tetrahyrofuran, Ethylacetat oder Dimethylformamid. Das 4-substituierte 1,2,4-Tirazolin-3,5-dion wird in der Regel als Lösung zu der gerührten Polymerlösung langsam zugetropft. Die Umsetzung kann in einem weiten Temperaturbereich von -50°C bis zum Siedepunkt des entsprechenden Lösungsmittels, vorzugsweise zwischen -20°C und +80°C durchgeführt werden.

Eine Umsetzung der Polymeren kann aber auch in Substanz, d.h. in der Schmelze erfolgen.

Die Oxidation von 1,4-disubstituierten Triazolindionen zu stabilen cyclischen Diacylhydracylradikalen wird von W.H. Pirkle und P.L. Gravel in J. Org. Chem. 43 (5), 808-815 (1978); J. Org. Chem. 42 (8), 1367-1369 (1977) und J. Am. Chem. Soc. 96, 3335-3336 (1974) beschrieben. Unbekannt war bisher, daß die erzeugten Radikale in der Lage sind, eine radikalische Polymerisation zu starten und auch überraschend, da ähnliche Hydrazylradikale als Inhibitoren bei der radikalischen Polymerisation wirksam sind, z.B. Diphenylpikrylhydrazyl (DPPH)

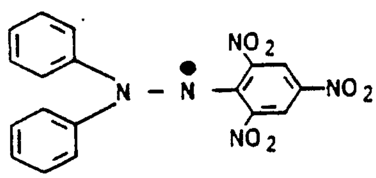

(B. Vollmert, Grundriss der Makromolekularen Chemie, Band I, S. 74; Karlsruhe 1985).

Die Oxidation des polymergebundenen Starters und damit - bei Gegenwart des Monomeren - die Auslösung der Pfropfreaktion gemäß Gleichung (2) erfolgt üblicherweise in Lösung. Als Lösungsmittel kommen die vorerwähnten Lösungsmittel in Betracht. Die Lösungsmittel können aber auch gegen radikalisch polymerisierbare Monomere ausgetauscht werden. Der Lösungsmittelaustausch kann in Destillationsanlagen sowohl diskontinuierlich als auch kontinuierlich durchgeführt werden. Üblicherweise werden kontinuierlich arbeitende Dünnschichtfilmverdampfer verwendet. Je nach Siedepunkt kann entweder im Vakuum oder unter Normaldruck gearbeitet werden.

Die Monomeren und Lösungsmittel können auch gleichzeitig in der Polymerlösung vorhanden sein.

Die Erzeugung von polymergebundenen Starter-Radikalen ist mit Oxidationsmitteln, welche ein genügend hohes Oxidationspotential aufweisen, ohne weiteres möglich. Als Oxidationsmittel kommen z.B. in Frage:
gelöster Sauerstoff; Peroxid-Verbindungen, die bei der radikalischen Polymerisation zum Polymerisationsstart üblicherweise eingesetzt werden; in organischen Medien lösliche Metallverbindungen, z.B. Fe- oder Cobaltacetylacetonat und andere komplexierte Oxidationsmittel.

Nach der Erzeugung des polymergebundenen Starterradikals kann wie in Gleichung (3) beschrieben die Addition an ein radikalisch polymerisierbares Monomere erfolgen, so daß Pfropfung resultiert. Bei Verwendung von Sauerstoff oder Peroxiden kann neben den Pfropf(co)polymeren auch das entsprechende ungepfropfte Homo- oder Copolymere entstehen. Auf diese Weise ist während der radikalischen Polymerisation eine "in situ"-Pfropfung möglich.

Da gleichzeitig entstehende Pfropf(co)polymere und Homo- oder Copolymere chemisch einheitlich sind, werden "ideale Verträglichkeitsvermittler" während der Polymerisation erzeugt. Über die Menge des gebundenen Starters kann so in vorteilhafter Art und Weise der Gehalt an "Verträglichkeitsvermittler" gezielt eingestellt werden. Auf die Verwendung der genannten Pfropf(co)polymeren zur Erzeugung von mit

Kautschuk ausgerüsteten schlagfesten Thermoplasten wurde bereits hingewiesen.

Die Herstellung der erfindungsgemäßen Pfropf(co)polymeren kann kontinuierlich oder diskontinuierlich erfolgen. Diese Polymerisation kann in Masse-oder Lösungs- oder Masse-Suspensionspolymerisation in üblichen Polymerisationsapparaturen in einem weiten Temperaturbereich, wie z.B. von 40 °C bis 180 °C ausgeführt werden: bevorzugt ist ein Temperaturbereich von 70 bis 160 °C.

Die Einstellung des Molekulargewichts der Pfropf(co)polymeren kann u.a. durch Verwendung von Mercaptanen geregelt werden.

Schon während der Polymerisation oder danach können übliche Zusatzstoffe angewendet werden. Als Zusatzstoffe seien genannt:
Schmiermittel, Entformungsmittel, Antioxidantien, Antistatika, Pigmente, Farbstoffe, Füllstoffe, wie Glas- und Kohlenstoff-Fasern oder Metalle in Flocken-, Pulver- oder Faserform und Flammschutzmittel.

Die Einarbeitung der Zusatzstoffe nach der Polymerisation erfolgt dabei durch übliches Mischen bei Temperaturen von 200 bis 300 °C auf üblichen Mischern, Knetern, Walzen oder Extrudern.

Die erhaltenen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die nachstehend verwendeten Parameter werden wie folgt bestimmt:

1. Streckspannung $\sigma_S$ in [N/mm²] und Reißdehnung $\epsilon_R$ in [%] nach DIN 53 455.
2. Kerbschlagzähigkeit bei 23 °C in [kJ/m²] nach DIN 53 753.
3. Lochkerbschlagzähigkeit bei 23 °C in [kJ/m²] nach DIN 53 753.
4. Viskositätszahl, VZ, analog DIN 53 726, gemessen 0,5 %ig in Dimethylformamid bei 23 °C.
5. Die mittlere Teilchengröße $d_{50}$ (Gewichtsmittel) der dispersen Kautschukphase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf der Abszisse dann der Äquivalentdurchmesser abgegriffen werden. Die angegebenen mittleren Durchmesser stellen dabei einen Mittelwert von mindestens 5000 Teilchen dar.
6. Die Transluzenz wurde nach einer selbsterstellten Skala bewertet.

Diese Skala umfaßt die Werte 1 bis 9 in der folgenden Tabelle, wobei die niedrigeren Werte eine gute Transluzenz repräsentieren. Um die in der Tabelle angeführten Werte zu erzielen, wurde ein handelsübliches schlagfestes Polystyrol (Produkt A), das 15 Gew.% eines Styrol-Butadien-Blockkautschuks mit Kapselteilchenmorphologie (Typ Buna BL 6533) mit 60 Gew.% Butadien enthielt, zugrundegelegt (Benotung 4). Abmischungen dieses Produktes A in den in der Tabelle genannten Gewichtsverhältnissen mit Standardpolystyrol der VZ 96 [ml/g] (0,5 %ig in Toluol) ergaben die Werte von 3 bis 1 für die Transluzenz.
Durch Abmischung des genannten Standardpolystyrols mit einem schlagfesten Polystyrol mit Zellenteilchenmorphologie (Produkt B; Polystyrol 475 der BASF; Handelsprodukt; thermisch hergestellt), das 8 Gew.% Polybutadien enthält, wurden höhere Werte der Transluzenz erzielt; vgl. die Werte 5 bis 9 in der Tabelle.
Von Proben der erfindungsgemäßen Produkte der Beispiele wurden Preßplättchen hergestellt und visuell mit den entsprechenden Preßplättchen des Standards der Skala verglichen.

| Note für die Transluzenz | Produkt A | Abmischung in Gew.Teilen Standard-Polystyrol | Produkt B |
|---|---|---|---|
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 8 |
| 7 | 88 | 0 | 12 |
| 8 | 84 | 0 | 16 |
| 9 | 80 | 0 | 20 |

7. Die Lichtdurchlässigkeit wurde an 1 mm dicken 20 Minuten bei 230 °C gepreßten Rundplättchen gemessen. Jede Probe wurde am Farbmeßgerät DMC 25 der Firma Zeiss einmal in Durchsicht unter

Einbeziehung des Streulichts gemessen. Es wurde Tageslicht (Normalart D 65) als Sender und das menschliche Auge (10-Grad-Normbeobachter) als Empfänger angenommen. Die Y-Koordinate ist die Lichtdurchlässigkeit in %.

8. Die Pfropf-Ausbeute wurde bei einem Polymerisationsumsatz von 20 %, bezogen auf die eingesetzten Monomeren, bestimmt.

Der entnommene Polymersirup wurde in Ethylbenzol gelöst und anschließend das Polymere in 10-fachem Überschuß Ethanol ausgefällt. Das Polymere wurde filtriert, gründlich mit Ethanol gewaschen und bei 80°C im Vakuum über Nacht getrocknet. An den gewonnenen Polymeren wurde die Pfropfausbeute wie folgt bestimmt:

a) Pfropfausbeutebestimmung bei Polystyrol-Hartmatrices

2 mal je 5,0 g der zu untersuchenden Probe werden mit 53 ml Methylethylketon und 1 ml einer 0,6 %igen Methylethylketon/Irganox 1076-Lösung im Zentrifugenbecher übergossen und mit einem Magnetrührer bis zur vollständigen Lösung des Polystyrols gerührt. Anschließend werden jeder Probe unter Rühren 66 ml Aceton zugetropft und das Gemisch 15 Minuten gerührt. Nun wird die Mischung in einer Laborzentrifuge (Beckmann J 21 B) bei 14000 Umdrehungen/Minute 20 Minuten zentrifugiert. Die überstehende Lösung, die das nicht gepfropfte Polystyrol enthält, wird am Rotationsverdampfer zur Trockene eingedampft. Dieser Vorgang wird mit dem unlöslichen Rückstand noch 2 mal wiederholt und die löslichen ungepfropften Polystyrolfraktionen gemeinsam zur Trockene eingedampft. Zur vollständigen Trocknung wird bei 60°C über Nacht in einem Vakuumschrank getrocknet.

Die Menge des gepfropften Polystyrols ergibt sich aus der Auswaage des ebenfalls getrockneten Extraktionsrückstandes und dem Abzug der bekannten eingesetzten Menge Kautschuk.

Die Pfropfausbeute ist nach folgender Definition zu berechnen:

$$\text{Pfropfausbeute [\%]} = \frac{PS_{\text{gepfropft}}}{PS_{\text{gepfropft}} + PS_{\text{ungepfropft}}} \times 100$$

b) Pfropfausbeutebestimmung bei Polystyrol-Acrylnitril-Hartmatrices.

2 mal je 2,0 g der zu untersuchenden Probe werden mit 100 ml Aceton im Zentrifugenbecher übergossen und mit einem Magnetrührer 2 Stunden gerührt. Danach wird die Mischung in einer Laborzentrifuge (Beckmann J 21 B) bei 1400 Umdrehungen/Minute 20 Minuten zentrifugiert. Die überstehende Lösung, die das nicht gepfropfte Polystyrol-Acrylnitril enthält, wird am Rotationsverdampfer zur Trockene eingeengt. Dieser Vorgang wird mit dem unlöslichen Rückstand noch 2 mal wiederholt und die löslichen ungepfropften Polystyrol-Acrylnitril-Fraktionen gemeinsam zur Trockene eingedampft. Zur vollständigen Trocknung wird bei 80°C über Nacht in einem Vakuumschrank getrocknet.

Die Menge des gepfropften Polystyrol-Acrylnitrils ergibt sich aus der Auswaage des ebenfalls getrockneten Extraktionsrückstandes und dem Abzug der bekannten eingesetzten Menge Kautschuk.

Die Pfropfausbeute ist nach folgender Definition zu berechnen:

$$\text{Pfropfausbeute [\%]} = \frac{PSAN_{\text{gepfr.}}}{PSAN_{\text{gepfr.}} + PSAN_{\text{ungepfr.}}} \times 100$$

c) Pfropfausbeutenbestimmung bei Polymethylmethacrylat-Hartmatrices.

Die Bestimmung der Pfropfausbeute verläuft analog derjenigen in 8b angegebenen Vorschrift.

9. Die elektronenmikroskopischen Aufnahmen wurden nach Anfärben des Kautschuks mit $OsO_4$ in bekannter Weise aufgenommen.

Beispiele 1 bis 5

Pfropfung von PTD-modifiziertem Polybutadien mit Styrol (sofortige Reglerzugabe)

150 g Polybutadien (Buna HX 500; Bayer AG) werden in 1350 g Cyclohexan gelöst. Die in der Tabelle 1 angegebene Menge 4-Phenyl-1,2,4-triazolin-3,5-dion (PTD) wird in 40 ml trockenem THF gelöst und langsam zu der gerührten Kautschuklösung getropft. Zum Vergleich wurde PTD in einem Blindversuch weggelassen. Die rote Farbe des PTD verschwindet innerhalb von 2 Minuten nach Zugabeende. Anschließend wird das Cyclohexan unter vermindertem Druck (200 mbar 50 bis 60 °C) gegen 1725 g Styrol ausgetauscht. Nach Aufheben des Unterdrucks werden zusätzlich 44,4 g Weißöl (Minog 70), 2,25 g Irganox 1076 als Stabilisator und 1,9 g tert.-Dodecylmercaptan als Molekulargewichtsregler zum Reaktionsgemisch gegeben.

Alle Beispiele 1 bis 6 wurden diskontinuierlich nach dem Masse-Suspensions-Polymerisations-Verfahren in einem mit einem Ankerrührer ausgestatteten 5 l Reaktor durchgeführt.

Man polymerisiert zunächst isotherm in Lösung bei 123 °C und 200 Rührerumdrehungen je Minute bis zu einem Umsatz von 40 %, bezogen auf Styrol. Danach wird in wäßriger Suspension weiterpolymerisiert.

Hierzu werden 1,9 g Dicumylperoxid sowie 1800 ml $H_2O$, 18 g eines Suspensionshilfsmittels auf Basis Ethylenoxid (Luviscol K 90 der BASF Aktiengesellschaft) und 1,8 g Natriumpyrophosphat zugegeben. In Suspension wird bei 300 Rührerumdrehungen je Minute 6 Stunden isotherm bis zu einem Umsatz von mehr als 99 %, bezogen auf Styrol, polymerisiert.

Das erhaltene Perlpolymerisat wird mit destilliertem Wasser gründlich gewaschen und bei 80 °C über Nacht i.V. getrocknet. Die Eigenschaften der Polymerisate und die Pfropfausbeute sind in Tabelle 1 zusammengefaßt. Die Abbildungen 1 und 2 zeigen beispielhaft die Kautschukmorphologie in den hergestellten Produkten.

Eine Erhöhung der Triazolindionfunktionalisierung des eingesetzten Kautschuks erhöht die Pfropfausbeute und parallel dazu die Transluzenz des schlagfesten Polystyrols. Mit der Zunahme der Kautschukfunktionalisierung nimmt die durchschnittliche Teilchengröße der erzeugten Kautschukpartikel ab; als Folge steigt auch die Streckspannung und die Reißdehnung an.

Tabelle 1

| Pfropfung von PTD-modifiziertem Polybutadien mit Styrol | | | | | | | | |
|---|---|---|---|---|---|---|---|---|
| Beispiel | Zugabe an PTD | | Pfropfausbeute [%] | Streckspannung [N/mm] | Reißdehnung [%] | Lochschlagzähigkeit [kJ/m] | $d_{50}$ [um] | Transluzenz [%] |
| | [g] | [mol%] bez. auf HX 500 | | | | | | |
| Vergl. | - | - | 7,5 | 21,4 | 3,4 | 10,5 | 1,9 | > 9 |
| 1 | 0,110 | 0,023 | 10,4 | 22,5 | 3,7 | 10,4 | 1,3 | > 9 |
| 2 | 0,225 | 0,046 | 11,6 | 22,9 | 3,0 | 7,7 | 1,2 | > 9 |
| 3 | 0,450 | 0,093 | 15,4 | 25,5 | 10,1 | 6,7 | 0,5 | > 9 |
| 4 | 0,900 | 0,185 | 16,0 | 27,5 | 12,2 | 4,8 | 0,2 | 9 |
| 5 | 1,800 | 0,370 | 22,5 | 28,3 | 12,9 | 4,5 | 0,15 | 9 |

Beispiel 6

Pfropfung von PTD-modifiziertem Polybutadien mit Styrol (verzögerte Reglerzugabe)

Die Versuche werden in der für Beispiel 1 bis 5 angegebenen Weise diskontinuierlich nach dem Masse-Suspensions-Verfahren durchgeführt, mit der Maßgabe, daß 1,9 g tert.-Dodecylmercaptan erst bei einem Umsatz von 20 %, bezogen auf Styrol, zugegeben werden.

In der Tabelle 2 sind die Eigenschaften der Polymerisate und die Pfropfausbeuten zusammengefaßt.

Tabelle 2

| Pfropfung von PTD-modifiziertem Polybutadien mit Styrol | | | | | | | | |
|---|---|---|---|---|---|---|---|---|
| Beispiel | Zugabe an PTD | | Pfropfausbeute [%] | Streckspannung [N/mm] | Reißdehnung [%] | Lochschlagzähigkeit [kJ/m] | $d_{50}$ [um] | Transluzenz [%] |
| | [g] | [mol%] bez. auf HX 500 | | | | | | |
| Vergl. | - | - | 15,5 | 24,1 | 2,9 | 7,9 | | > 9 |
| 6 | 0,45 | 0,093 | 38,9 | 26,7 | 6,5 | 4,1 | | 7-8 |

Beispiel 7

Pfropfung von PTD-modifiziertem EPDM mit Styrol

150 g EPDM (Buna AP 331; Hüls AG, D-4370 Marl) werden in 1350 g Cyclohexan gelöst. Die in der Tabelle 3 angegebene Menge PTD wird in 40 ml trockenem THF gelöst und langsam zu der gerührten Kautschuklösung getropft. Die rote Farbe verschwindet innerhalb von 5 Minuten nach Zugabeende. Anschließend wird das Cyclohexan unter vermindertem Druck (200 mbar/50 bis 60 °C) gegen 1725 g Styrol ausgetauscht. Nach Aufheben des Vakuums werden 44,4 g Weißöl (Minog 70), 2,25 g Irganox 1076 als Stabilisator und 1,9 g tert.-Dodecylmercaptan als Molekulargewichtsregler zugegeben.

Die Versuche werden diskontinuierlich nach dem Masse-Suspensions-Verfahren in einem mit einem Ankerrührer ausgestatteten 5 l-Reaktor durchgeführt.

Das Reaktionsgemisch wird isotherm in Lösung bei 123 °C und 200 Rührerumdrehungen je Minute bis zu einem Umsatz von 40 %, bezogen auf Styrol und danach in wäßriger Suspension zu Ende polymerisiert. Hierzu werden 1,9 g Dicumylperoxid sowie 1800 ml $H_2O$, 18 g eines Suspensionshilfsmittels auf Basis Ethylenoxid (Luviskol K 90 der BASF AG) und 1,8 g Natriumpyrophosphat zugegeben. In Suspension wird bei 300 Rührerumdrehungen je Minute 6 Stunden isotherm bei 130 °C bis zu einem Umsatz von mehr als 99 %, bezogen auf Styrol, polymerisiert.

Das erhaltene Perlpolymerisat wird mit destilliertem Wasser gründlich gewaschen und bei 80 °C über Nacht i.V. getrocknet. Die Eigenschaften der Polymerisate und die Pfropfausbeute sind in Tabelle 3 zusammengefaßt.

Tabelle 3

| Pfropfung von PTD-modifiziertem EPDM mit Styrol | | | | | | |
|---|---|---|---|---|---|---|
| Beispiel | Zugabe an PTD (g) | Pfropfausbeute (%) | Streckspannung (N/mm) | Reißdehnung (%) | Lochschlagzähigkeit (kJ/m) | $d_{50}$ (um) |
| Vergl. | - | 3,9 | 15,8 | 2,6 | 4,0 | |
| 7 | 0,45 | 20,4 | 25,3 | 7,3 | 4,2 | |

Beispiel 8

Pfropfung von PTD-modifiziertem Butylkautschuk mit Styrol

150 g Butylkautschuk (Polysar Butyl 100; Polyisobutylen-co-isopropen mit einem Ungesättigtheitsgrad von 0,6 mol-%) werden in 1350 g Cyclohexan gelöst. Die in der Tabelle 4 angegebene Menge PTD wird in 40 ml trockenem THF gelöst und langsam zu der gerührten Kautschuklösung getropft. Die rote Farbe des PTD verschwindet innerhalb von 5 Minuten nach Zugabeende. Anschließend wird das Cyclohexan unter vermindertem Druck (200 mbar/50 bis 60 °C) gegen 1725 g Styrol ausgetauscht. Bei atmosphärischem Druck werden 44,4 g Weißöl (Minog 70), 2,25 g Irganox 1076 und 1,9 g tert.-Dodecylmercaptan als Molekulargewichtsregler zugegeben.

Die Versuche werden diskontinuierlich nach dem Masse-Suspensions-Verfahren in einem mit einem Ankerrührer ausgestatteten 5 l-Reaktor durchgeführt.

Das Reaktionsgemisch wird isotherm in Lösung bei 123 °C und 200 Rührerumdrehungen je Minute bis zu einem Umsatz von 40 %, bezogen auf Styrol und danach in wäßriger Suspension zu Ende polymerisiert.

Hierzu werden 1,9 g Dicumylperoxid sowie 1800 ml $H_2O$, 18 g eines Suspensionshilfsmittels auf Basis Ethylenoxid (Luviskol K 90 der BASF AG) und 1,8 g Natriumpyrophosphat zugegeben. In Suspension wird bei 300 Rührerumdrehungen je Minute 6 Stunden isotherm bei 130 °C bis zu einem Umsatz von mehr als

99 %, bezogen auf Styrol, polymerisiert.

Das erhaltene Perlpolymerisat wird mit destilliertem Wasser gründlich gewaschen und bei 80 °C über Nacht i.V. getrocknet. Die Eigenschaften der Polymerisate und die Pfropfausbeute sind in Tabelle 4 zusammengefaßt.

Tabelle 4

| Pfropfung von PTD-modifiziertem Butylkautschuk | | | | | | |
|---|---|---|---|---|---|---|
| Beispiel | Zugabe an PTD (g) | Pfropfausbeute (%) | Streckspannung (N/mm) | Reißdehnung (%) | Lochschlagzähigkeit (kJ/m) | $d_{50}$ (um) |
| Vergl. | - | | | | | |
| 8 | 0,45 | | | | | |

Beispiel 9 bis 15

Pfropfung von PTD-modifiziertem Polybutadien mit Styrol-Acrylnitril (Starter-Fahrweise)

240 g Polybutadien (Buna HX 500; Bayer AG) werden in 1760 g Cyclohexan gelöst. Die in der Tabelle 5 angegebenen Mengen PTD wird in 40 ml trockenem THF gelöst und langsam zu der gerührten Kautschuklösung getropft. Die rote Farbe des PTD verschwindet innerhalb von 2 Minuten nach Zugabeende. Anschließend wird das Cyclohexan unter vermindertem Druck (200 mbar/50 bis 60 °C) gegen 2070 g Styrol ausgetauscht. Bei atmosphärischem Druck werden zusätzlich 690 g Acrylnitril zugegeben.

Die Versuche werden diskontinuierlich nach dem Masse-Suspensionspolymerisationsverfahren in einem mit einem Ankerrührer ausgestatteten 6 l-Reaktor durchgeführt.

Der Reaktorinhalt wird auf 80 °C gebracht, mit 200 Rührerumdrehungen je Minute gerührt und mit 1,6 g 75 %igem tert.-Butylperpivalat (Trigonox 25 bis C75; Akzo Chemicals) versetzt um die Polymerisation zu starten. Es wird isotherm bei 80 °C bis zu einem Umsatz von 20 %, bezogen auf Styrol und Acrylnitril polymerisiert.

Nach Erreichen von 20 % Umsatz werden dem Reaktionsansatz 4,8 g tert.-Dodecylmercaptan und 3,0 g Irganox 1076, jeweils in 25 ml Styrol gelöst, zugeführt und dieser durch nochmaligen Zusatz von 0,4 g 75 %igem tert.-Butylperpivalat bis zu einem Umsatz von 35 % polymerisiert.

Danach wird in Suspension weiterpolymerisiert. Hierzu werden 2,0 g Dicumylperoxid, gelöst in 20 ml Styrol, sowie 2000 ml $H_2O$, 20 g eines Suspensionshilfsmittels auf Basis Ethylenoxid (Luviskol K 90 der BASF AG), 50 g Ertivinol und 2,0 g Natriumpyrophosphat zugegeben. Die erhaltene Suspension wird bei 300 Rührerumdrehungen je Minute 3 Stunden isotherm bei 110 °C, 3 Stunden isotherm bei 130 °C und 4 Stunden isotherm bei 140 °C bis zu einem Umsatz von mehr als 99 %, bezogen auf Styrol und Acrylnitril polymerisiert.

Das erhaltene Perlpolymerisat wird mit destilliertem Wasser gründlich gewaschen und bei 80 °C über Nacht i.V. getrocknet. Die Eigenschaften der Polymerisate und die Pfropfausbeute sind in Tabelle 5 zusammengefaßt. Vom Produkt nach Beispiel 14 und dem Vergleichspräparat wurden elektronenmikroskopische Aufnahmen zur Bestimmung der Kautschukmorphologie angefertigt.

Tabelle 5

| Pfropfung von PTD modifiziertem Polybutadien mit Styrol-Acrylnitril | | | | | | |
|---|---|---|---|---|---|---|
| Beispiel | Zugabe an PTD | | Pfropfausbeute (%) | Streckspannung (N/mm) | Kerbschlagzähigkeit (kJ/m) | Lichtdurchlässigkeit (%) |
| | (g) | (Mol-%) bez. auf HX 500 (monomer) | | | | |
| Vergl. | - | - | 17,5 | 36,4 | 11,0 | 63,2 |
| 9 | 0,019 | 0,0025 | 21,3 | 39,4 | 7,2 | 64,8 |
| 10 | 0,039 | 0,0050 | 23,1 | 41,9 | 6,0 | 65,7 |
| 11 | 0,057 | 0,0075 | 26,6 | 43,5 | 4,7 | 66,9 |
| 12 | 0,076 | 0,0100 | 26,7 | 43,5 | 3,0 | 67,7 |
| 13 | 0,117 | 0,0150 | 33,9 | 45,0 | 2,5 | 69,7 |
| 14 | 0,157 | 0,0200 | 26,3 | 44,2 | 2,0 | 70,2 |
| 15 | 0,311 | 0,0400 | | | | |

Beispiel 16 bis 20

Pfropfung von PTD-modifiziertem Polybutadien mit Styrol-Acrylnitril (Starter-Fahrweise mit Ethylbenzol als Lösungsmittel)

150 g Polybutadien (Buna HX 500; Bayer AG) werden in 450 g Ethylbenzol gelöst. Die in der Tabelle 6 angegebenen Mengen 4-Phenyl-1,2,4-triazolin-3,5-dion (PTD) werden in 40 ml trockenem THF gelöst und langsam zu der gerührten Kautschuklösung getropft. Die rote Farbe des PTD verschwindet innerhalb von 5 Minuten nach Zugabeende.

Danach werden zusätzlich 1294 g Styrol und 431 g Acrylnitril unter Rühren zur Kautschuklösung gegeben.

Die Versuche werden diskontinuierlich nach dem Masse-Suspensionspolymerisationsverfahren in einem mit einem Ankerrührer ausgestatteten 5 l-Reaktor durchgeführt.

Der Reaktorinhalt wird auf 80 °C gebracht, mit 200 Rührerumdrehungen je Minute gerührt und mit 0,9 g 75 %igem tert.-Butylperpivalat (Trigonox 25 bis C75; Akzo Chemicals) versetzt um die Polymerisation zu starten. Es wird isotherm bei 80 °C bis zu einem Umsatz von 20 %, bezogen auf Styrol und Acrylnitril polymerisiert. Anschließend werden 3,8 g tert.-Dodecylmercaptan und 2,3 g Irganox 1076, jeweils in 25 ml Styrol gelöst, zugeführt und durch Zusatz von weiteren 0,2 g 75 %igem tert.-Butylperpivalat bis zu einem Umsatz von 35 % polymerisiert.

Danach wird in Suspension weiterpolymerisiert. Hierzu werden 1,4 g Dicumylperoxid, gelöst in 20 ml Styrol, sowie 1800 ml $H_2O$, 18 g eines Suspensionshilfsmittels auf Basis Ethylenoxid (Luviskol K 90 der BASF AG), 50 g Ertivinol und 1,8 g Natriumpyrophosphat zugegeben und eine wäßrige Suspension hergestellt.

Diese wird bei 300 Rührerumdrehungen je Minute 3 Stunden isotherm bei 110 °C, 3 Stunden isotherm bei 130 °C und 3 Stunden isotherm bei 140 °C bis zu einem Umsatz von mehr als 99 %, bezogen auf Styrol und Acrylnitril polymerisiert.

Das erhaltene Perlpolymerisat wird mit destilliertem Wasser gründlich gewaschen und bei 80 °C über Nacht i.V. getrocknet. Nach 2 Stunden Trocknung betrugen die flüchtigen Anteile ca. 12 Gew.-%. Durch Entgasung bei 245 °C auf einen Extruder vom Typ ZDSK 28 (Werner & Pfleiderer) wurden diese auf unter 1 % reduziert. Die Eigenschaften der Polymerisate und die Pfropfausbeute sind in Tabelle 6 zusammengefaßt.

Tabelle 6

| Pfropfung von PTD modifiziertem Polybutadien mit Styrol-Acrylnitril (tert.-Butylperpivalat als Starter, Ethylbenzol als Lösungsmittel) | | | | | | |
|---|---|---|---|---|---|---|
| Beispiel | Zugabe an PTD | | Pfropfausbeute (%) | Streckspannung (N/mm) | Lichtdurchlässigkeit (%) | VZ (0,5 % in DMF) (ml/g) |
| | (g) | (Mol-%) bez. auf HX 500 | | | | |
| Vergl. | - | - | 19,3 | 33,2 | 61,3 | 59,9 |
| 15 | 0,487 | 0,10 | 26,7 | 34,5 | 65,2 | 62,8 |
| 16 | 0,729 | 0,15 | 28,6 | 36,3 | 66,2 | 62,3 |
| 17 | 0,972 | 0,20 | 32,1 | 37,9 | 66,4 | 59,6 |
| 18 | 1,215 | 0,25 | 33,9 | 38,6 | 67,7 | 62,7 |
| 19 | 2,431 | 0,50 | 39,1 | 39,2 | 67,7 | 61,5 |

Beispiele 21 bis 23

Pfropfung von PTD-modifiziertem Polybutadien mit Styrol-Acrylnitril (Thermische Fahrweise)

240 g Polybutadien (Bunar HX 500; Bayer AG) werden in 1760 g Cyclohexan gelöst. Die in der Tabelle 7 angegebene Menge PTD wird in 40 ml trockenem THF gelöst und langsam zu der gerührten Kautschuklösung getropft. Die rote Farbe des PTD verschwindet innerhalb von 2 Minuten nach Zugabeende. Anschließend wird das Cyclohexan unter vermindertem Druck (200 mbar/50 bis 60 °C) gegen 2070 g Styrol ausgetauscht. Bei atmosphärischem Druck werden zusätzlich 690 g Acrylnitril zugegeben.

Die Versuche werden diskontinuierlich nach dem Masse-Suspensions-Polymerisationsverfahren in einem mit einem Ankerrührer ausgestatteten 5 l-Reaktor durchgeführt.

Die Polymerisation wird isotherm bei 110 °C gestartet. Bei 20 % Umsatz, bezogen auf Styrol und Acrylnitril wird eine Probe zur Bestimmung der Pfropfausbeute entnommen.

Ebenfalls bei 20 % Umsatz werden 4,8 g tert.-Dodecylmercaptan und 3,0 g Irganox 1076, jeweils in 75 ml Styrol gelöst, zugegeben und bis 40 % Umsatz weiterpolymerisiert.

Danach wird in wäßriger Suspension wie unter Beispiel 9 bis 15 angegeben, weiterpolymerisiert und das Polymerisat gewonnen.

Tabelle 7

| Pfropfung von PTD-modifiziertem Polybutadien mit Styrol-Acrylnitril (Thermische Polymerisation) | | | | |
|---|---|---|---|---|
| Beispiel | Zugabe an PTD | | Pfropfausbeute (%) | VZ (0,5 % in DMF) (ml/g) |
| | (g) | (Mol-%) bez. auf HX 500 | | |
| Vergl. | - | - | 13,5 | 69,7 |
| 21 | 0,078 | 0,010 | 15,9 | 82,9 |
| 22 | 0,194 | 0,025 | 25,7 | 90.3 |
| 23 | 0,311 | 0,033 | 26,8 | 86,4 |

Beispiel 24

Pfropfung von PTD-modifiziertem EPDM mit Styrol-Acrylnitril

240 g EPDM (Buna AP 331; Chemische Werke Hüls) werden in 1760 g Cyclohexan gelöst. Die in der Tabelle 8 angegebene Menge PTD wird in 40 ml trockenem THF gelöst und langsam zu der gerührten Kautschuklösung getropft. Die rote Farbe des PTD verschwindet innerhalb von 2 Minuten nach Zugabeende. Anschließend werden 800 g Cyclohexan bei 200 mbar/50 bis 60 °C gegen 2070 g Styrol ausgetauscht. Bei atmosphärischem Druck werden zusätzlich 690 g Acrylnitril zugegeben.

Die Versuche werden diskontinuierlich nach dem Masse-Suspensions-Polymerisationsverfahren in einem mit einem Ankerrührer ausgestatteten 6 l-Reaktor durchgeführt.

Der Reaktorinhalt wird auf 80 °C erwärmt, mit 200 Umdrehungen je Minute gerührt und mit 1,6 g 75 %igem tert.-Butylperpivalat (Trigonox 25 bis C75; Akzo Chemicals) versetzt, um die Polymerisation zu starten. Es wird isotherm bei 80 °C bis zu einem Umsatz von 20 %, bezogen auf Styrol und Acrylnitril polymerisiert.

Nach Erreichen von 20 % Umsatz werden 4,8 g tert.-Dodecylmercaptan und 3,0 g Irganox 1076, jeweils in 25 ml Styrol gelöst, zugesetzt und durch nochmaligen Zusatz von 0,4 g 75 %igen tert.-Butylperpivalat bis zu einem Umsatz von 35 % polymerisiert. Sodann werden 2,0 g Dicumylperoxid, gelöst in 20 ml Styrol, sowie 2000 ml Wasser, 20 g Luviskol K 90, 50 g Ertivinol und 2,0 g Natriumpyrophosphat zugegeben.

Die erhaltene Suspensions wird bei 300 Rührerumdrehungen je Minute 3 Stunden isotherm bei 110 °C, 3 Stunden isotherm bei 130 °C und 4 Stunden isotherm bei 140 °C bis zu einem Umsatz von mehr als 99 %, bezogen auf Styrol und Acrylnitril polymerisiert.

Das erhaltene Perlpolymerisat wird mit destilliertem Wasser gründlich gewaschen und bei 80 °C über

Nacht i.V. getrocknet. Nach 24 Stunden Trocknung betrugen die flüchtigen Anteile ca. 3 Gew.-%. Durch Entgasung bei 245° C auf einem Extruder vom Typ ZDSK 28 (Werner & Pfleiderer) wurden diese auf unter 1 Gew.-% reduziert.

Die Eigenschaften der Polymerisate und die Pfropfausbeute sind in Tabelle 8 zusammengefaßt.

Tabelle 8

| Pfropfung von PTD-modifiziertem EPDM mit Styrol und Acrylnitril | | | | |
|---|---|---|---|---|
| Beispiel | Zugabe an PTD (g) | Pfropfausbeute | VZ (0,5 % in DMF) (ml/g) | Streckspannung (N/mm) |
| Vergl. | - | 2,9 | 92,0 | 28,1 |
| 24 | 0,5 | 20,8 | 80,5 | 38,9 |

Beispiel 25

Pfropfung von PTD-modifiziertem Butylkautschuk mit Styrol-Acrylnitril

240 g Butylkautschuk (Polysar Butyl PB 402; Polysar) werden in 1760 g Cyclohexan gelöst. Die in der Tabelle 9 angegebenen Mengen PTD wird in 40 ml trockenem THF gelöst und langsam zu der gerührten Kautschuklösung getropft. Die rote Farbe des PTD verschwindet innerhalb von 2 Minuten nach Zugabeende. Anschließend werden 800 g Cyclohexan unter vermindertem Druck (200 mbar/50 bis 60° C) gegen 2070 g Styrol ausgetauscht. Bei atmosphärischem Druck werden zusätzlich 690 g Acrylnitril zugegeben.

Die Versuche werden diskontinuierlich nach dem Masse-Suspensionspolymerisationsverfahren in einem mit einem Ankerrührer ausgestatteten 6 l-Reaktor durchgeführt.

Der Reaktorinhalt wird auf 80° C gebracht, mit 200 Umdrehungen je Minute gerührt und mit 1,6 g 75 %igem tert.-Butylperpivalat (Trigonox 25 bis C75; Atzo Chemicals) versetzt, um die Polymerisation zu starten. Es wird isotherm bei 80° C bis zu einem Umsatz von 20 %, bezogen auf Styrol und Acrylnitril polymerisiert. Nach Erreichen von 20 % Umsatz werden 4,8 g tert.-Dodecylmercaptan und 3,0 g Irganox 1076, jeweils in 25 ml Styrol gelöst, zugesetzt und durch nochmaligen Zusatz von 0,4 g 75 %igem tert.-Butylperpivalat bis zu einem Umsatz von 35 % polymerisiert.

Danach wird in Suspension weiterpolymerisiert. Hierzu werden 2,0 g Dicumylperoxid, gelöst in 20 ml Styrol, sowie 2000 ml $H_2O$, 20 g Luviskol K 90, 50 g Ertivinol und 2,0 g Natriumpyrophosphat zugegeben. Die erhaltene Suspension wird bei 300 Rührerumdrehungen je Minute 3 Stunden isotherm bei 110° C, 3 Stunden isotherm bei 130° C und 4 Stunden isotherm bei 140° C bis zu einem Umsatz von mehr als 99 %, bezogen auf Styrol und Acrylnitril polymerisiert.

Das erhaltene Perlpolymerisat wird mit destilliertem Wasser gründlich gewaschen und bei 80° C über Nacht i.V. getrocknet. Nach 24 Stunden Trocknung betrugen die flüchtigen Anteile ca. 3 Gew.-%. Durch Entgasung bei 245° C auf einem Extruder vom Typ ZDSK 28 (Werner & Pfleiderer) wurden diese auf unter 1 Gew.-% reduziert. Die Eigenschaften der Polymerisate und die Pfropfausbeute sind in Tabelle 9 zusammengefaßt.

Tabelle 9

| Pfropfung von PTD-modifiziertem Butylkautschuk mit Styrol und Acrylnitril | | | | |
|---|---|---|---|---|
| Beispiel | Zugabe an PTD (g) | Pfropfausbeute | VZ (0,5 % in DMF) (ml/g) | Streckspannung (N/mm) |
| Vergl. | - | 0,2 | 74,2 | 22,3 |
| 25 | 0,5 | 15,8 | 75,8 | 26,4 |

Beispiel 26

Pfropfung von PTD-modifiziertem Polybutadien mit Methylmethacrylat

160 g Polybutadien (Buna HX 500; Bayer AG) werden in 1900 g Methylmethacrylat gelöst. Die in der Tabelle 10 angegebenen Mengen 4-Phenyl-1,2,4-triazolyl-3,5-dion (PTD) wird in 20 ml trockenem THF gelöst und langsam zu der gerührten Kautschuklösung getropft. Die rote Farbe des PTD verschwindet innerhalb von 2 Minuten nach Zugabeende.

Die Versuche werden diskontinuierlich nach dem Masse-Suspensionspolymerisationsverfahren in einem mit einem Ankerrührer ausgestatteten 5 l-Reaktor durchgeführt.

Nach Zugabe von 1,9 g Benzoylperoxid, gelöst in 25 ml Methylmethacrylat, wird mit einer Rührergeschwindigkeit von 200 Umdrehungen je Minute 85° C isotherm bis zu einem Umsatz von 30 % polymerisiert. Bei 20 % Umsatz, bezogen auf Methylmethacrylat, wird eine Probe zur Bestimmung der Pfropfausbeute entnommen und gleichzeitig 5,7 g tert.-Dodecylmercaptan als Molekulargewichtsregler zugesetzt.

Nach Erreichen von 30 % Umsatz wird in Suspension weiterpolymerisiert.

Hierzu werden 1,7 g Dicumylperoxid sowie 1800 ml Wasser, 27 g Luviskol K 90 und 1,8 g Natriumpyrophoshat zugegeben und die erhaltene Suspension bei 300 Umdrehungen je Minute 3 Stunden isotherm bei 110° C, 3 Stunden isotherm bei 130° C und 4 Stunden isotherm bei 140° C bis zu einem Umsatz von mehr als 99 %, bezogen auf Methylmethacrylat, polymerisiert.

Das erhaltene Perlpolymerisat wird mit Wasser gründlich gewaschen und bei 80° C über Nacht i.V. getrocknet. Die Eigenschaften der Polymerisate und die Pfropfausbeute sind in Tabelle 10 zusammengefaßt.

Tabelle 10

| Pfropfung von PTD-modifiziertem Polybutadien mit Methylmethacrylat | | | |
|---|---|---|---|
| Beispiel | Zugabe an PTD (g) | Pfropfausbeute (%) | Streckspannung (N/mm) |
| Vergl. | - | 7,9 | 49,7 |
| 26 | 1,0 | 20,7 | 57,4 |

Beispiel 27

Pfropfung von PTD-modifiziertem EPDM mit Methylmethacrylat

121,7 g EPDM-Kautschuk (Buna AP 451; Bunawerke Hüls) werden in 999,3 g Ethylbenzol gelöst. Die in der Tabelle 11 angegebenen Mengen PTD wird in 20 ml trockenem THF gelöst und langsam zu der gerührten Kautschuklösung (50° C) getropft. Die rote Farbe des PTD verschwindet innerhalb von Minuten nach Zugabeende. Nach Aufheizen auf 100° C werden 1900 g Methylmethacrylat zugesetzt.

Die Polymerisation wird in einem mit einem Ankerrührer ausgestatteten 5 l-Reaktor durchgeführt, in dem bei 100° C zunächst 0,95 g 75 %iges tert.-Butylperpivalat (Trigonox 25 bis C75, Akzo Chemicals) gegeben werden.

Die Polymerisationsgeschwindigkeit wird auf 10 % Umsatz je Stunde durch fortlaufende zugabe von 0,38 g 75 %igem tert.-Butylperpivalat je Stunde eingestellt. Während der Polymerisation wird der Ankerrührer mit 100 Umdrehungen je Minute betrieben. Bei 20 Umsatz, bezogen auf Methylmethacrylat wird eine Probe zur Bestimmung der Pfropfausbeute entnommen und gleichzeitig 5,7 g tert.-Dodecylmercaptan als Molekulargewichtsregler zugesetzt. Nach Erreichen von 30 Umsatz wird in Suspension weiterpolymerisiert. Hierzu werden 1,7 g Dicumylperoxid sowie 1800 ml $H_2O$, 27 g Luviskol K 90 und 1,8 g Natriumpyrophosphat zugegeben und bei 300 Umdrehungen je Minute 3 Stunden isotherm bei 110° C, 3 Stunden isotherm bei 130° C und 4 Stunden isotherm bei 140° C bis zu einem Umsatz von mehr als 99 %, bezogen

auf Methylmethacrylat, polymerisiert.

Das erhaltene Perlpolymerisat wird bei 60 °C über Nacht i.V. getrocknet. Die flüchtigen Anteile von 15 Gew.-%. werden durch Entgasung bei 240 °C auf einem ZDSK 28-Extruder von Werner & Pfleiderer auf 0,9 % reduziert.

Die Eigenschaften der Polymerisate und die Pfropfausbeute sind in Tabelle 11 zusammengefaßt.

Tabelle 11

| Pfropfung von PTD-modifiziertem EPDM mit Methylmethacrylat | | |
|---|---|---|
| Beispiel | Zugabe an PTD (%) | Pfropfausbeute (%) |
| Vergl. | - | 8,3 |
| 25 | 0,608 | 22,8 |

Beispiel 26

Pfropfung von PTD-modifiziertem Butylkautschuk mit Methylmethacrylat

165,2 g Butylkautschuk (Polysar Butyl 402; Polysar) werden bei 50 °C in 475 g Cyclohexan gelöst. Die in der Tabelle 12 angegebenen Mengen PTD wird in 20 ml trockenem THF gelöst und langsam bei 50 °C zu der gerührten Kautschuklösung getropft. Die rote Farbe des PTD verschwindet innerhalb von 5 Minuten nach Zugabeende. Anschließen wird bei gleichzeitigem Zulauf von 1900 g Methylmethacrylat auf 100 °C aufgeheizt. Dabei ist darauf zu achten, eine Ausfällung des Kautschuks zu vermeiden. Die Polymerisation, Probenahme zur Bestimmung der Pfropfausbeute und Aufarbeitung des Polymerisats erfolgt wie in Beispiel 27 beschrieben.

Die Eigenschaften der Polymerisate und die Pfropfausbeuten sind in Tabelle 12 zusammengefaßt.

| Beispiel | Zugabe an PTD (%) | Pfropfausbeute (%) |
|---|---|---|
| Vergl. | - | 3,0 |
| 28 | 0,826 | 31,2 |

In den Abbildungen 10 und 11 werden die Butylkautschukmorphologien in elektronenmikroskopischen Aufnahmen dargestellt.

## Ansprüche

1. Verfahren zur Herstellung verzweigter Pfropf(co)polymerisate durch Bildung von freien Radikalen entlang eines vorgebildeten Kettenmoleküls und Zugabe von Monomeren, wobei durch Radikalkettenpolymerisation Seitenketten gebildet werden (Pfropfcopolymerisation), dadurch gekennzeichnet, daß man ein beweglichen Wasserstoff (H) enthaltendes Kettenmolekül der allgemeinen Struktur (I)

$$\{E\}_m ; - \underset{H}{\underset{|}{A}}\}_p \quad (I)$$

in der $E_m$ und $A_p$ jeweils m bzw. p einpolymerisierte Fadenabschnitte eines Kettenmoleküls, m und p jeweils wenigstens 1 und zusammen mindestens 100 bedeuten, mit einem Triazolindion der allgemeinen Formel II oder einem Azodicarbonsäureester der allgemeinen Formel III,

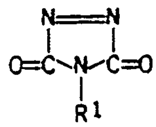

(II)

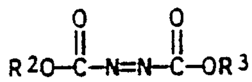

(III)

in denen $R^1$ und $R^2$ und/oder $R^3$ von Wasserstoff verschieden ist, in an sich bekannter Weise umsetzt, an den so erhaltenen Substituenten durch Oxidation freie Radikale erzeugt, sowie mit mindestens einem radikalisch polymerisierbaren, olefinisch ungesättigten Monomeren zusammenbringt

2. Verfahren nach Anspruch 1, dadurch gekennzeichnet, daß die durch Oxidation erzeugten polymeren Radikale die allgemeine Struktur IV bzw. V aufweisen

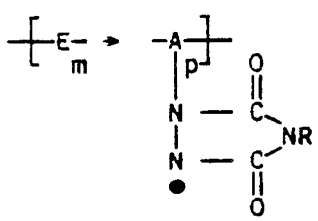

(IV)

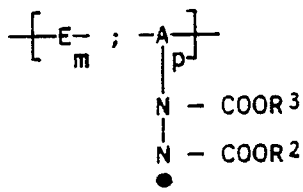

(V).

3. Verfahren zur Herstellung von insbesondere schlagzäh modifizierten thermoplastischen Polymeren durch Pfropfcopolymerisation eines oder mehrerer Monomerer auf vorgebildeten Dienkautschuk, dadurch gekennzeichnet, daß man die Pfropfcopolymerisation nach Anspruch 1 anwendet.

4. Pfropf(co)polymere mit mindestens einer Einheit der allgemeinen Struktur

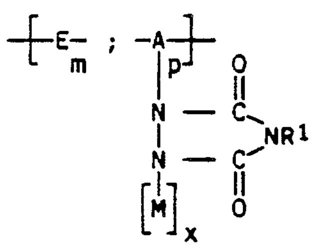

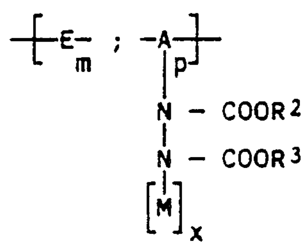

in der $[M]_x$ eine aus x Monomereinheiten bestehende polymere Seitenkette aus einem durch radikalische Polymerisation gebildeten Homo- oder Copolymeren, x eine zahl von 10 bis 100 000, E und A einpolymerisierte Fadenabschnitte eines Kettenmoleküls und m und p jeweils wenigstens 1 und zusammen eine Zahl von mehr als 100 (den Polymerisationsgrad) bedeuten, die durch Addition eines 4-substituierten 1,2,4-Triazolin-3,5-dions und/oder Azodicarbonsäureesters an einen eine allylische CH-Gruppierung oder einen anderen, bewegliche Protonen aufweisenden Fadenabschnitt gebildet worden sind, wobei die Substituenten $R^1$ bzw. $R^2$ und $R^3$ Alkyl, Aryl oder Hetaryl oder deren Äquivalente bedeuten und $R^2$ und $R^3$ gleich oder verschieden sein können.